# EUROPÄISCHE PATENTSCHRIFT

(11) **EP 1 107 397 B1**
(45) Veröffentlichungstag und Bekanntmachung des Hinweises auf die Patenterteilung: **23.02.2005**
(21) Anmeldenummer: 00123031.7
(22) Anmeldetag: 24.10.2000
(51) Int. Cl.: H01R 43/00, H02G 3/08, H02G 3/22

(54) **Kabeltülle sowie Verfahren zu deren Herstellung**
Cable sleeve and method of making the same
Manchon pour câble et méthode de sa fabrication

(30) Priorität: 03.12.1999 DE 19958431
(43) Veröffentlichungstag der Anmeldung: 13.06.2001
(73) Patentinhaber: LEONI Bordnetz-Systeme GmbH & Co KG, 90402 Nürnberg (DE)
(72) Erfinder: Miersch, Erik, 97355 Wiesenbronn (DE)
(74) Vertreter: Tergau & Pohl Patentanwälte

(56) Entgegenhaltungen:
- EP-A- 0 469 853
- DE-A- 3 742 731
- DE-C- 3 836 146
- US-A- 5 371 825

## Beschreibung

Die Erfindung betrifft eine Kabeltülle und ein Verfahren zu dessen Herstellung.

Zur Herstellung von Kabeltüllen bzw. Kabelbäumen wird üblicherweise eine Vielzahl von langgestreckten Kabelelementen, wie z.B. elektrische und optische Adern, in eine gewünschte Verlegebahn gebracht und dann mit Kunststoff umschäumt, umgossen oder umspritzt. Nach dem Abkühlen und Erstarren des Kunststoffmaterials sind die Kabelelemente somit als Bündel mit vorgegebenem Bahnverlauf in einem ausgehärteten Kunststoffkörper zusammengefasst und fixiert. In der Praxis kann es bei der Herstellung des Tüllenkörpers bzw. der Tüllenummantelung durch das heiße Kunststoffmaterial zu einer zu hohen Temperaturbelastung von thermisch empfindlichen Kabelelementen, wie z.B. Lichtwellenleitern, und somit zu deren Schädigung kommen. Weiterhin besteht durch die Bündelung der Kabelelemente und/oder durch die Vorgabe eines bestimmten Bahnverlaufs für das jeweilige Kabelelement die Gefahr, dass mechanisch empfindliche Kabelelemente mit einem zu hohen Querdruck belastet, zu stark abgeknickt oder gebogen und somit unzulässig stark mechanisch beansprucht werden.

Aus der DE 37 42 731 A1 ist eine Kabeltülle zu entnehmen, die mit Hilfe eines gespritzten Stopfens längswasserdicht ausgebildet ist, und aus der GB 21 81 605 A ist es bekannt, Leitungen innerhalb eines Schutzschlauches durch eine Kabeltülle zu führen.

Der Erfindung liegt die Aufgabe zugrunde, einen Weg aufzuzeigen, wie Kabeltüllen in einfacher sowie zuverlässiger Weise hergestellt werden können.

Gemäß der Erfindung wird diese Aufgabe bei einer Kabeltülle der eingangs genannten Art dadurch gelöst, dass im Tüllenkörper mindestens ein Schutzschlauch enthalten ist, das mindestens ein Kabelelement zum Schutz vor thermischen und/oder mechanischen Beanspruchungen aufnimmt, und dass der Schutzschlauch in seiner Rohrwand mindestens einen Querkanal aufweist, durch den in sein Inneres das Kunststoffmaterial des Tüllenkörpers bei dessen Herstellung von außen so eingedrungen ist, dass im Bereich dieser Eindringstelle der Schutzschlauch längswasserdicht ausgefüllt ist.

Dadurch, dass für mechanisch und/oder thermisch empfindliche Kabelelemente, wie z.B. Lichtwellenleiter, eigens mindestens ein Schutzschlauch im Kunststoffmaterial des Tüllenkörpers vorgesehen ist, ist weitgehend sichergestellt, dass solche empfindlichen Kabelelemente vor thermischen und/oder mechanischen Überbeanspruchungen geschützt sind. So bildet der Schutzschlauch beispielsweise beim Gießen oder Schäumen des Kunststofftüllenkörpers eine thermische Barriere bzw. Abschirmung für die von ihm umfassten Kabelelemente, d.h. das jeweilige Kabelelement im Schutzschlauch ist nicht unmittelbar dem heißen Kunststoffmaterial bei der Herstellung des Tüllenkörpers ausgesetzt. Zugleich stellt der Schutzschlauch eine mechanisch verstärkte Durchführung im Kunststoffmaterial des Tüllenkörpers derart dar, dass ein zusätzlicher mechanischer Schutz vor Knickbeanspruchungen der Kabeltülle bereitgestellt ist. Sollen ferner mittels der Kabeltülle zwei Gruppen von unterschiedlich thermisch und/oder mechanisch empfindlichen Kabelelementen zusammengefasst werden, so ist es mit Hilfe des Schutzschlauchs möglich, die empfindlicheren Kabelelemente im Schutzschlauch unterzubringen und damit von den thermisch und/oder mechanisch weniger empfindlichen Kabelelementen zu separieren bzw. zu trennen. Darüber hinaus stellt der Schutzschlauch weitgehend sicher, dass etwaig angreifende Querdruckkräfte, z.B. verursacht durch die Bündelung mehrerer Kabelelemente oder durch Klemmung des Bündelanfangs und Bündelendes, um dessen Kabelelemente in eine gewünschte Kurvenbahn zu bringen, weitgehend von den Kabelelementen im Inneren des Schutzschlauchs abgefangen bzw. abgehalten werden können.

Dadurch, dass an mindestens einer Längsposition des Schutzschlauchs mindestens ein Querkanal in dessen Rohrwand vorgesehen ist, wird erreicht, dass flüssiges Kunststoffmaterial bei der Herstellung des Tüllenkörpers in das Innere des Schutzschlauchs eindringen kann, so dass im Bereich dieser Eindringstelle der Schutzschlauch weitgehend längswasserdicht ausgefüllt werden kann. Auf diese Weise ist bereits gleichzeitig mit der Herstellung des Tüllenkörpers im selben Arbeitsgang eine Abdichtung des Schutzschlauchs in Längsrichtung bewirkt, d.h. ein extra Arbeitsgang für das Längswasserdichtmachen des Schutzschlauchs ist nicht erforderlich.

Gemäß einer Weiterbildung der Erfindung ist der jeweilige Querkanal im Schutzschlauch zweckmäßigerweise derart dimensioniert, dass der Schutzschlauch durch das eindringende Kunststoffmaterial lediglich auf eine Teillänge seiner Längserstreckung längswasserdicht ausgefüllt ist. Auf der einen Seite wird also eine gezielte Dosierung des Schutzschlauchs mit dem Kunststoffmaterial derart vorgenommen, dass die zufließende Materialmenge des Kunststoffmaterials ausreicht, eine einwandfreie Abdichtung des Schutzschlauchs in Längsrichtung bereitzustellen. Auf der anderen Seite wird der Zustrom heißen Kunststoffmaterials gleichzeitig dahingehend reguliert, dass lediglich so viel Kunststoffmaterial in den Schutzschlauch eindringt, dass eine thermische Überbeanspruchung der dort eingelegten, empfindlichen Kabelelemente weitgehend vermieden ist. Dazu wird der Schutzschlauch nicht entlang seiner gesamten Längserstreckung mit dem Kunststoffmaterial ausgefüllt, sondern lediglich lokal entlang einem Teilabschnitt seiner Gesamtlänge.

Sonstige bevorzugte Weiterbildungen der Erfindung sind in den Unteransprüchen wiedergegeben.

Die Erfindung wird nun anhand von in den beigefügten Zeichnungen dargestellten Ausführungsbeispielen näher erläutert.

Es zeigen:
- Fig. 1: in schematischer Längsschnittdarstellung ein Ausführungsbeispiel einer erfindungsgemäßen, fertigen Kabeltülle,
- Fig. 2: eine schematische Querschnittsdarstellung entsprechend der Linie II-II in Fig. 1,
- Fig. 3: eine schematische Querschnittsdarstellung entsprechend der Linie III-III ini Fig. 1,
- Fig. 4: in schematischer Querschnittsdarstellung einen Schutzschlauch ausschnittsweise im Detail, das gegenüber dem Schutzschlauch der Fig. 1 bis 3 abgewandelt ist.

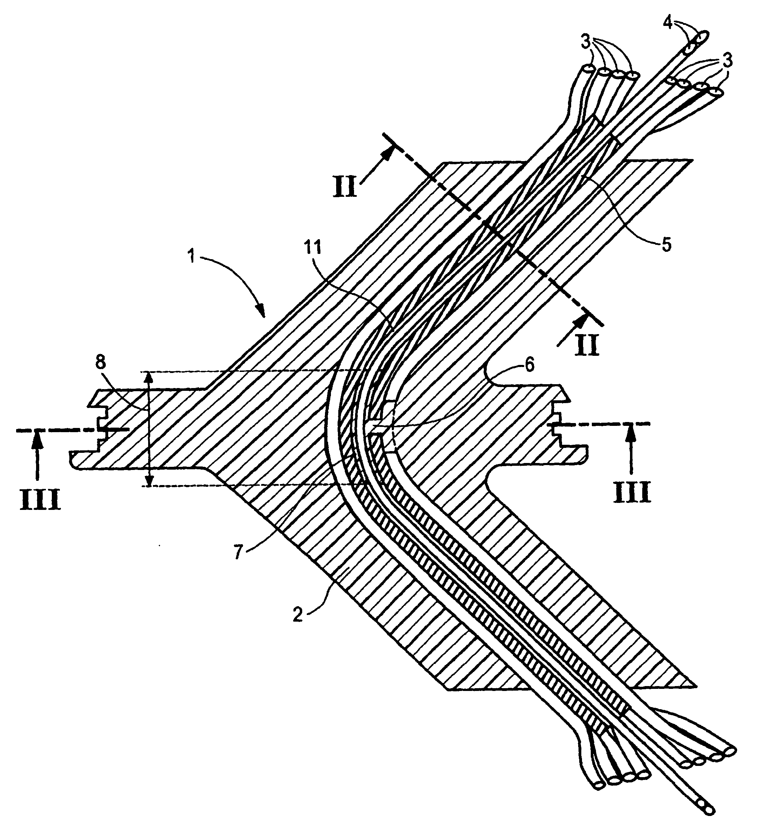

Fig. 1 zeigt in schematischer Längsschnittdarstellung eine Kabeltülle 1 im fertigen Zustand. Diese Kabeltülle 1 weist einen Mantel aus z.B. aufgeschäumtem Kunststoffmaterial auf, das im ausgehärteten Zustand einen im Wesentlichen starren, formstabilen Tüllenkörper 2 bildet. In dessen Kunststoffmaterial ist eine Vielzahl von langgestreckten Kabelelementen eingebettet. Diese Kabelelemente sind dabei im Kunststoffmaterial des Tüllenkörpers 2 bündelartig zusammengefasst und mit einem vorgegebenen Bahnverlauf lagefixiert. In Fig. 1 verlaufen die Kabelelemente im Wesentlichen parallel nebeneinander. Ihnen ist dabei durch die Einhüllung im Kunststoffmaterial des Tüllenkörpers 2 beispielhaft jeweils eine in erster Näherung parabelförmige Bahn aufgezwungen.

Bei der Kabeltülle 1 von Fig. 1 ist eine erste Gruppe von langgestreckten Kabelelementen durch elektrische Leiter 3 bzw. Adern üblichen Aufbaus gebildet. Etwa zentral bzw. mittig in diesem Bündel von elektrischen Leitern 3 ist zusätzlich ein Schutzschlauch 5 angeordnet. Dieser Schutzschlauch ist in Fig. 1 beispielhaft mit zwei Lichtwellenleitern 4 belegt. Diese Lichtwellenleiter bilden dabei eine zweite Gruppe von Kabelelementen, die thermisch und/oder mechanisch empfindlicher als die außerhalb des Schutzschlauchs 5 angeordneten Kabelemente - hier die elektrischen Leiter 3 - sind. Der Schutzschlauch 5 dient dazu, die empfindlichen Lichtwellenleiter 4 vor thermischen und/oder mechanischen Beanspruchungen, z.B. Knick oder Druckbelastungen, zu schützen. So bildet der Schutzschlauch 5 beim Spritzen, Gießen oder Schäumen des Kunststoff-Tüllenkörpers 2 um das Bündel von Kabelelementen eine thermische Barriere bzw. Abschirmung für die in sie eingebrachten, thermisch empfindlichen Lichtwellenleiter 4. Denn die Lichtwellenleiter 4 werden bei der Herstellung des Tüllenkörpers 2 nicht unmittelbar dem heißen, flüssig gemachten oder sich im Falle von ZweikomponentenSystemen erwärmenden Kunststoffmaterial entlang ihrer gesamten Durchführlänge ausgesetzt. Demgegenüber sind die um den Schutzschlauch 5 ringsum angeordneten elektrischen Leiter 3 direkt in das Kunststoffmaterial des Tüllenkörpers 2 eingebettet.

Durch die etwa zentrale Anordnung des Schutzschlauchs 5 im Bündel der elektrischen Leiter 3 wird zugleich eine weitere, zusätzliche thermische Abschirmung für die Lichtwellenleiter 4 im Schutzschlauch bewirkt. Denn durch eine lagen- bzw. schichtartige Anordnung der elektrischen Leiter 3 rings um den Außenumfang des Schutzschlauchs 5 wird die Temperatureinwirkung des heißen Kunststoffmaterials bei der Herstellung des Tüllenkörpers 2 auf das Kabelelement/Lichtwellenleiter zusätzlich reduziert. Die Lichtwellenleiter 4 im Inneren des Schutzschlauchs 5 sind also gegenüber dem heißen Kunststoffmaterial des Tüllenkörpers 2 bei dessen Herstellung durch eine zweifache thermische Barriere abgeschirmt: Zum einen primär durch die Rohrwand des Schutzschlauchs 5; zum anderen sekundär durch die außen rings um den Außenumfang des Schutzschlauchs 5 in Form mindestens einer Lage verteilt angeordneten, elektrischen Leitern 3.

Zusätzlich oder unabhängig von dieser thermischen Sperrfunktion des Schutzschlauchs 5 ist der Schutzschlauch 5 zweckmäßigerweise derart ausgebildet, dass er eine mechanisch verstärkte Durchführung im Kunststoffmaterial des Tüllenkörpers 2 bildet. Auf diese Weise ist ein zusätzlicher mechanischer Schutz für die Lichtwellenleiter 4 bei Knick- oder Druckbeanspruchungen bereitgestellt. Zweckmäßigerweise ist der Schutzschlauch 5 derart querdruckstabil ausgebildet, dass die Einwirkung von unzulässig hohen Querdruckkräften auf die mechanisch empfindlichen Lichtwellenleiter 4 weitgehend abgehalten sind. Solche Querdruckkräfte können beispielsweise bereits durch die Bündelung der Kabelelemente auftreten. Kritisch ist auch die Festklemmung bzw. Fixierung des Bündelanfangs und Bündelendes, um die Kabelelemente in eine vorgegebene Kurvenbahn für die Tüllenherstellung zu bringen. Auch hierfür stellt der Schutzschlauch 5 weitgehend sicher, dass die mechanisch empfindlichen Lichtwellenleiter 4 nicht mit unzulässig hohen Querdruckkräften beaufschlagt werden. Als Material für den Schutzschlauch kommen beispielsweise PA, PP oder PE in Betracht.

Zusammenfassend betrachtet sind somit in der Kabeltülle 1 zwei Gruppen von unterschiedlich thermisch und/oder mechanisch empfindlichen Kabelelementen zusammengefasst. Dabei sind die thermisch und/oder empfindlicheren Kabelelemente, wie z.B. die beiden Lichtwellenleiter 4, in einem zusätzlichen Schutzschlauch 5 untergebracht und damit von den thermisch und/oder mechanisch weniger empfindlichen Kabelelementen, wie z.B. die elektrischen Leiter 3 separiert bzw. getrennt.

Selbstverständlich kann es im Bedarfsfall auch zweckmäßig sein, im Kunststoffkörper 2 der Kabeltülle 1 mehr als einen Schutzschlauch unterzubringen. Dabei kann ein solcher Schutzschlauch 5 neben den erwähnten Kabelelementen beliebige andere empfindliche elektrische oder optische Übertragungselemente aufnehmen.

Um den Schutzschlauch 5 in seinem Inneren dagegen abzudichten, dass eingetretene Feuchte, eindiffundierter Wasserdampf oder eine sonstige, eingedrungene Flüssigkeit sich entlang seiner axialen Längserstreckung ausbreitet, weist der Schutzschlauch 5 in seiner Rohrwand an mindestens einer Stelle einen Querkanal 6 auf. Beim Schutzschlauch 5 von Fig. 1 ist ein solcher Querkanal durch eine Öffnung in der Rohrwand etwa in der Mitte der Längserstreckung der Kabeltülle 1 vorgesehen. Dabei befindet sich die Öffnung etwa im Scheitelpunkt des annäherungsweise parabelförmig verlaufenden Schutzschlauchs 5. Der Querkanal 6 erstreckt sich quer bzw. lateral, insbesondere senkrecht zur axialen Längserstrekkung des Schutzschlauchs 5. Durch diesen Querkanal 6 ist es bei der Herstellung des Tüllenkörpers 2, z.B. durch Umspritzen oder Umschäumen des Bündels von Kabelelementen mit heißem, zähflüssig gemachtem oder sich erwärmendem Kunststoffmaterial zugleich im selben Arbeitsgang ermöglicht, dass das Kunststoffmaterial von außen auch in das Innere des Schutzschlauchs 5 eindringen kann. Im fertigen Zustand der Kabeltülle ist somit der Schutzschlauch 5 im Bereich dieser Eindringstelle längswasserdicht mit dem Kunststoffmaterial des Tüllenkörpes 2, nämlich mit einer Dichtmasse 7, ausgefüllt. Auf diese Weise ist bereits zugleich mit der Herstellung des Tüllenmantels im selben Arbeitsgang eine Abdichtung des Schutzschlauchs 5 in Längsrichtung bewirkt, d.h. ein extra Arbeitsgang ist dafür nicht erforderlich.

Zweckmäßigerweise wird der Querkanal 6 derart dimensioniert, dass der Schutzschlauch 5 durch das eindringende Kunststoffmaterial bei der Herstellung des Tüllenkörpers 2 lediglich auf einer Teillänge seiner axialen Längserstreckung weitgehend längswasserdicht ausgefüllt wird. Es wird also in vorteilhafter Weise eine gezielte, dosierte Befüllung des Schutzschlauchs 5 mit dem Kunststoffmaterial dahingehend vorgenommen, dass die zufließende Materialmenge des Kunststoffmaterials zwar ausreicht, als Dichtmasse 7 eine einwandfreie Abdichtung des Schutzschlauchs 5 bereitzustellen, zugleich aber den Zustrom des heißen Kunststoffmaterials dahingehend zu regulieren, dass eine thermische Überbeanspruchung der dort eingelegten Lichtwellenleiter 4 weitgehend vermieden ist. Die beiden Lichtwellenleiter 4 sind in die Dichtmasse 7 eingebettet und somit zugleich auch in gewissem Grad entlang der axialen Längserstreckung des Schutzschlauchs 5 lagefixiert. Die Dichtmasse 7 dichtet somit lediglich entlang einem Teilabschnitt 8 der Gesamtlängserstreckung des Schutzschlauchs 5 dessen Innenraum gegen das Ausbreiten von Feuchte, Wasserdampf oder sonstigen Flüssigkeiten in axialer Richtung ab. Dazu füllt die Dichtmasse 7 den Innenquerschnitt des Schutzschlauchs 5 praktisch vollständig aus. Da sich das Kunststoffmaterial bei seinem Eindringen durch den Querkanal 6 nicht zuletzt wegen seiner geringen Masse schnell abkühlt und sich lediglich auf einer geringen Teilstrecke des Schutzschlauchs in dessen Innenraum in axialer Richtung ausbreitet, sind thermische Überbeanspruchungen der Lichtwellenleiter 4 vermieden.

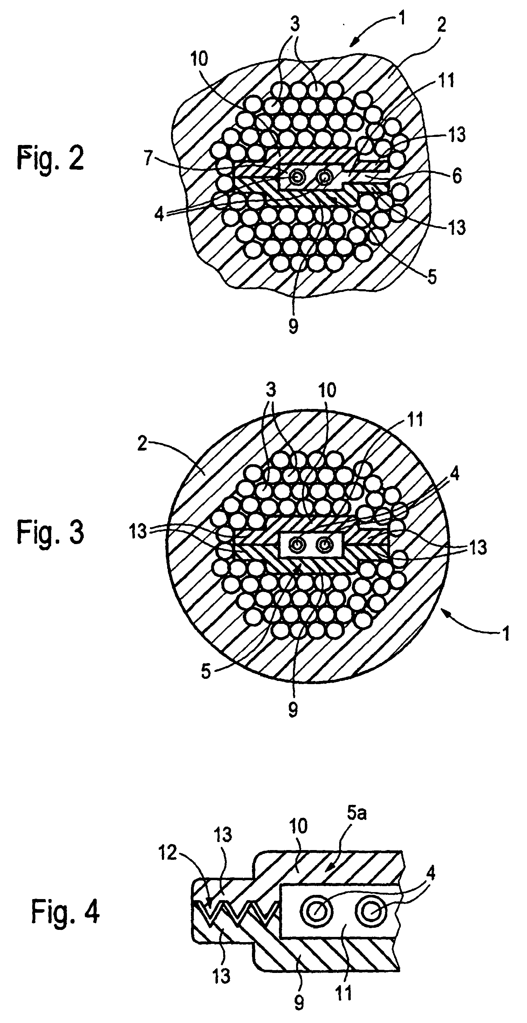

Fig. 2 zeigt in schematischer Querschnittsdarstellung die Kabeltülle 1 von Fig. 1 an einer Längsposition ohne Querkanal im Schutzschlauch. Der Schutzschlauch 5 setzt sich in Fig. 2 aus zwei Teilhälften zusammen. Jede Teilhälfte 9,10 bildet eine annäherungsweise U-profilförmige Halbschale. Die beiden Profilteile 9,10 sind dabei derart zusammengesetzt, dass sich ein rundum geschlossener Innenraum 11 für den Schutzschlauch 5 ergibt. Durch die zweiteilige Ausbildung ist es ermöglicht, den Schutzschlauch 5 zum Einlegen der Lichtwellenleiter 4 bei der Herstellung der Kabeltülle 1 zu öffnen. Dadurch können die Lichtwellenleiter 4 mit bereits an ihren Enden fixierten Verbindungselementen in einfacher Weise von oben in das Unterteil 9 eingelegt werden. Das Oberteil 10 wird dann korrespondierend zum Unterteil auf dieses aufgesetzt und die Lichtwellenleiter 4 in der rechteckförmigen Kammer 11 des Schutzschlauchs 5 eingeschlossen. Zweckmäßigerweise lassen sich die beiden Teilhälften 9,10 des Schutzschlauchs 5 miteinander verriegeln. Vorzugsweise werden die beiden Teilhälften 9,10 aneinander fixiert, beispielsweise mit Hilfe von Schmelzkleber, sonstigen Haftmitteln oder auch durch übliche mchanische Fixierungsmittel.

Fig. 3 zeigt die Kabeltülle 1 von Fig. 1 an einer Längsposition des Schutzschlauchs 5, wo dieser seinen Querkanal 6 aufweist. Der Querkanal 6 weist eine derartige Radialerstreckung auf, dass zwischen dem Außenbereich des Tüllenkörpers 2 und dem eingedrungenen Kunststoffmaterial 7 im Innenraum 11 des Schutzschlauchs 5 eine weitgehend durchgängige Materialverbindung gebildet ist. Dabei wirken die Seitenflansche 13 der U-förmigen Profilteile 9,10 des Schutzschlauchs 5 als eine Art Abweiser für die außen angeordneten, elektrischen Leiter 3, d.h. sie halten den Zugang vom äußeren Tüllenkörperbereich in das Innere des Schutzschlauchs 5 hinein offen, so dass ein weitgehend ungehinderter Zufluss von Kunststoffmaterial sichergestellt ist.

Die elektrischen Leiter 3 sind dabei zweckmäßigerweise so positioniert, dass der Querkanal 6 im Schutzschlauch 5 frei zugänglich bleibt, um einen weitgehend ungehinderten Materialzufluss des Kunststoffmaterials in das Innere des Schutzschlauchs 5 hinein sicherzustellen.

Fig. 4 zeigt in schematischer Querschnittsdarstellung einen Ausschnitt eines modifizierten Schutzschlauchs 5a im Detail. Gegenüber dem Schutzschlauch 5 der Fig. 1 bis 3 weisen die im Montagezustand aneinanderliegenden Flächen der Seitenflansche 13 eine sich in Längsrichtung erstreckende Verzahnung 12 auf, um im geschlossenen Zustand einen weitgehend dichten Außenmantel für den Schutzschlauch 5a bereitstellen zu können. Die Verzahnung 12 ist durch V-förmige Profilierungen der einander zugewandten Seitenränder der beiden U-Profilteile 9,10 erreicht, wobei die Profilierungen so ausgebildet sind, dass sie sich passförmig zusammensetzen und dadurch in einfacher Weise lagefixieren lassen.

Selbstverständlich ist es auch möglich, den jeweilige Schutzschlauch einteilig auszubilden. Dann ist es für eine einfache und effiziente Herstellung der Kabeltülle zweckmäßig, solche Schutzschläuche vorab mit mechanisch oder thermisch zu schützenden Kabelelementen, wie z.B. Lichtwellenleitern, zu bestücken und so für die Herstellung von Kabeltüllen vorrätig zu halten. Beliebig ist auch die Querschnittsform und die Art, wie der Querkanal bereitgestellt wird.

Zur Herstellung einer erfindungsgemäßen Kabeltülle wird etwa folgendermaßen vorgegangen: Zunächst wird ein Bündel von Leitern bereitgestellt, wobei beispielsweise im Zentrum dieses Leiterbündels wenigstens ein Schutzschlauch mit einem oder mehreren Lichtwellenleitern 4 angeordnet ist. Der vorzugsweise aus zwei Teilhälften gebildete Schutzschlauch 5 wird zunächst aufgeklappt, die Lichtwellenleiter darin angeordnet und dann die beiden Teilhälften aufeinandergesetzt. Zweckmäßig dabei ist es, wenn die Teilhälften an einer Seite - etwa über ein Filmschamier- einstückig miteinander verbunden sind. Die Teilhälften können durch Kleber, Ultraschallverschweißung oder auch auf mechanische Weise aneinander fixiert sein. Ein solcherart vorbereitetes Kabelbündel wird in eine Form eingelegt, wobei die Enden der einzelnen Kabel aus der Form herausgeführt sind. Der Tüllenkörper 2 wird vorzugsweise aus Polyurethan gebildet, d.h. die üblichen zwei Ausgangs-Komponenten dieses Materials werden mit einem Mischkopf dem Formhohlraum zugeführt und reagieren dort ggf. unter Aufschäumung miteinander. Das zunächst noch flüssige Kunststoffmaterial dringt über den Querkanal in den Schutzschlauch ein. Der Durchmesser des Querkanals ist dabei so berechnet, dass der Schutzschlauch im Bereich der Eindringstelle nur zu einem geringen Teil seiner gesamten Länge aufgefüllt wird. Aufgrund der nur sehr geringen, in den Schutzschlauch eindringenden Materialmenge ist die thermische Belastung eines thermisch empfindlichen Leiters 4 entsprechend gering.

### Bezugszeichenliste

- 1: Kabeltülle
- 2: Tüllenkörper
- 3: elektrischer Leiter
- 4: Lichtwellenleiter
- 5: Schutzschlauch
- 6: Querkanal
- 7: Dichtmasse
- 8: Teilabschnitt
- 9: Teilhälfte
- 10: Teilhälfte
- 11: Innenraum
- 12: Verzahnung
- 13: Seitenflansch

## Patentansprüche

1. Kabeltülle (1) mit einem Tüllenkörper (2), durch dessen Kunststoffmaterial mindestens ein Kabelelement hindurchgeführt ist,
**dadurch gekennzeichnet,**
**dass** im Tüllenkörper (2) mindestens ein Schutzschlauch (5) enthalten ist, der mindestens ein Kabelelement (4) zum Schutz vor thermischer und/oder mechanischer Überbeanspruchung aufnimmt,
und **dass** der Schutzschlauch (5) in seiner Rohrwand mindestens einen Querkanal (6) aufweist, durch den in sein Inneres das Kunststoffmaterial des Tüllenkörpers (2) bei dessen Herstellung von außen so eingedrungen ist, dass im Bereich dieser Eindringstelle der Schutzschlauch (5) längswasserdicht ausgefüllt ist.

2. Kabeltülle nach Anspruch 1,
**dadurch gekennzeichnet,**
**dass** der Querkanal (6) eine derartige Erstreckung quer zur Längserstreckung des Schutzschlauches (5) aufweist, dass zwischen dem Außenmantelbereich des Tüllenkörpers (2) und dem eingedrungenen Kunststoffmaterial im Innenraum (11) des Schutzschlauches (5) eine durchgängige Materialverbindung gebildet ist.

3. Kabeltülle nach einem der vorhergehenden Ansprüche,
**dadurch gekennzeichnet,**
**dass** der jeweilige Querkanal (6) durch eine Öffnung in der Rohrwand des Schutzschlauches (5) gebildet ist.

4. Kabeltülle nach einem der vorhergehenden Ansprüche,
**dadurch gekennzeichnet,**
**dass** der Querkanal (6) derart dimensioniert ist, dass der Schutzschlauch (5) durch das bei der Herstellung des Tüllenkörpers (2) eindringende Kunststoffmaterial lediglich auf einer Teillänge seiner Längserstreckung längswasserdicht ausgefüllt ist.

5. Kabeltülle nach einem der vorhergehenden Ansprüche,
**dadurch gekennzeichnet,**
**dass** im Tüllenkörper (2) außen um den Schutzschlauch (5) herum eine Vielzahl von Kabelelementen angeordnet ist, die thermisch und/oder mechanisch unempfindlicher sind als ein Kabelelement im Schutzschlauch (5).

6. Kabeltülle nach Anspruch 5,
**dadurch gekennzeichnet,**
**dass** die thermisch und/oder mechanisch unempfindlicheren Kabelelemente elektrische Leiter (3) sind.

7. Kabeltülle nach einem der vorhergehenden Ansprüche,
**dadurch gekennzeichnet,**
**dass** im Schutzschlauch (5) als Kabelelement ein optisches Übertragungselement, insbesondere ein Lichtwellenleiter (4) vorgesehen ist.

8. Kabeltülle nach einem der vorhergehenden Ansprüche,
**dadurch gekennzeichnet,**
**dass** der Schutzschlauch (5) aus zwei Teilhälften (9,10) zusammengesetzt ist, wobei die Trennfuge zwischen den Teilhälften im Wesentlichen parallel zur Längserstreckung des Schutzschlauches verläuft.

9. Kabeltülle nach Anspruch 8,
**dadurch gekennzeichnet,**
**dass** die im Montagezustand aneinanderliegenden Flächen der Teilhälften (9,10) eine sich in Längsrichtung des Schutzschlauches (5) erstreckende Verzahnung (12) aufweist.

10. Kabeltülle nach einem der vorhergehenden Ansprüche,
**dadurch gekennzeichnet,**
**dass** der Tüllenkörper (2) aus Polyurethan besteht.

11. Verfahren zum Herstellen einer Kabeltülle (1) nach einem der vorhergehenden Ansprüche,
**dadurch gekennzeichnet,**
**dass** mindestens ein Kabelelement in mindestens einen Schutzschlauch zum Schutz vor thermischen und/oder mechanischen Beanspruchungen eingebracht wird, dass dann der derart belegte Schutzschlauch (5) mit flüssigem Kunststoffmaterial derart umhüllt wird, dass nach Erstarrung des Kunststoffmaterials ein Tüllenkörper (2) gebildet wird,
und **dass** beim Umhüllungsvorgang flüssiges Kunststoffmaterial zugleich durch mindestens einen Querkanal (6) in der Rohrwand des Schutzschlauches (5) derart in das Innere des Schutzschlauchs (5) von außen eingebracht wird,
**dass** im Bereich dieser Eindringstelle der Schutzschlauch (5) weitgehend längswasserdicht ausgefüllt wird.

12. Verfahren nach einem der Anspruch 11,
**dadurch gekennzeichnet,**
**dass** vor dem Umspritzen, Umgießen oder Umschäumen außen um den mindestens einen Schutzschlauch (5) herum eine Vielzahl von Kabelelementen angeordnet wird, die thermisch und/oder mechanisch unempfindlicher sind als ein Kabelelement im Schutzschlauch (5).

13. Verfahren nach Anspruch 11 oder 12,
**dadurch gekennzeichnet,**
**dass** als Kunstoffmaterial Polyurethan verwendet wird.

## Claims

1. Cable sleeve (1) with a sleeve body (2), through the plastics material of which at least one cable element is led, **characterized in that** the sleeve body (2) contains at least one protective tube (5), which receives at least one cable element (4) for protection from thermal and/or mechanical overloading, and **in that** the protective tube (5) has in its tube wall at least one transverse port (6), through which the plastics material of the sleeve body (2) has during its production penetrated from the outside into the interior of the said tube in such a way that, in the region of this point of penetration, the protective tube (5) is filled with a longitudinally watertight effect.

2. Cable sleeve according to Claim 1, **characterized in that** the transverse port (6) has such an extent transversely in relation to the longitudinal extent of the protective tube (5) that a continuous material connection is formed between the outer circumferential region of the sleeve body (2) and the penetrated plastics material in the interior space (11) of the protective tube (5).

3. Cable sleeve according to one of the preceding claims, **characterized in that** the respective transverse port (6) is formed by an opening in the tube wall of the protective tube (5).

4. Cable sleeve according to one of the preceding claims, **characterized in that** the transverse port (6) is dimensioned in such a way that the protective tube (5) is filled with a longitudinally watertight effect by the plastics material penetrating during the production of the sleeve body (2) only over part of the length of its longitudinal extent.

5. Cable sleeve according to one of the preceding claims, **characterized in that** arranged in the sleeve body (2) on the outside around the protective tube (5) are a multiplicity of cable elements which are thermally and/or mechanically less sensitive than a cable element in the protective tube (5).

6. Cable sleeve according to Claim 5, **characterized in that** the thermally and/or mechanically less sensitive cable elements are electrical conductors (3).

7. Cable sleeve according to one of the preceding claims, **characterized in that** an optical transmission element, in particular an optical waveguide (4), is provided in the protective tube (5) as the cable element.

8. Cable sleeve according to one of the preceding claims, **characterized in that** the protective tube (5) is composed of two part-halves (9, 10), the parting plane between the part-halves running substantially parallel to the longitudinal extent of the protective tube.

9. Cable sleeve according to Claim 8, **characterized in that** the surfaces of the part-halves (9, 10) that lie against each other in the assembled state have interlocking teeth (12) extending in the longitudinal direction of the protective tube (5).

10. Cable sleeve according to one of the preceding claims, **characterized in that** the sleeve body (2) consists of polyurethane.

11. Method for producing a cable sleeve (1) according to one of the preceding claims, **characterized in that** at least one cable element is introduced into at least one protective tube for protection from thermal and/or mechanical loads, **in that** the protective tube (5) occupied in this way is then sheathed with liquid plastics material in such a way that a sleeve body (2) is formed after the plastics material solidifies, and **in that**, during the sheathing operation, liquid plastics material is introduced from the outside into the interior of the protective tube (5) simultaneously through at least one transverse port (6) in the tube wall of the protective tube (5) in such a way that the protective tube (5) is largely filled with a longitudinally watertight effect in the region of this point of penetration.

12. Method according to Claim 11, **characterized in that**, before the sheathing by injection-moulding, casting or foam encapsulation, a multiplicity of cable elements which are thermally and/or mechanically less sensitive than a cable element in the protective tube (5) are arranged on the outside around the at least one protective tube (5).

13. Method according to Claim 11 or 12, **characterized in that** polyurethane is used as the plastics material.

## Revendications

1. Passe-câble (1) comprenant un corps de passe-câble (2) dont la matière plastique est traversée au moins par un élément de câble, **caractérisé en ce que** le corps de passe-câble (2) contient au moins une gaine de protection (5) qui reçoit au moins un élément de câble (4) pour la protection à l'encontre d'une contrainte excessive thermique et/ou mécanique et **en ce que** la gaine de protection (5) présente dans sa paroi tubulaire au moins un canal transversal (6) à travers lequel la matière plastique du corps de passe-câble (2) a pénétré jusque dans son intérieur lors de sa fabrication depuis l'extérieur de sorte que la gaine de protection (5) est remplie de manière étanche à l'eau en sens longitudinal dans la région de cet emplacement de pénétration.

2. Passe-câble selon la revendication 1, **caractérisé en ce que** le canal transversal (6) présente une extension perpendiculaire à l'extension longitudinale de la gaine de protection (5) telle qu'il se forme une liaison de matière continue entre la région de l'enveloppe extérieure du corps de passe-câble (2) et la matière plastique qui a pénétré dans l'espace compartiment intérieur (11) de la gaine de protection (5).

3. Passe-câble selon l'une des revendications précédentes, **caractérisé en ce que** le canal transversal respectif (6) est formé par une ouverture dans la paroi tubulaire de la gaine de protection (5).

4. Passe-câble selon l'une des revendications précédentes, **caractérisé en ce que** le canal transversal (6) est dimensionné de sorte que la gaine de protection (5) est remplie de manière étanche à l'eau en sens longitudinal par la matière plastique pénétrant lors de la fabrication du corps de passe-câble (2), seulement sur une longueur partielle de son extension longitudinale.

5. Passe-câble selon l'une des revendications précédentes, **caractérisé en ce qu'**une pluralité d'éléments de câble, qui sont moins sensibles thermiquement et/ou mécaniquement qu'un élément de câble dans la gaine de protection (5), sont agencés dans le corps de passe-câble (2) à l'extérieur autour de la gaine de protection (5).

6. Passe-câble selon la revendication 5, **caractérisé en ce que** les éléments de câble moins sensibles thermiquement et/ou mécaniquement sont des conducteurs électriques (3).

7. Passe-câble selon l'une des revendications précédentes, **caractérisé en ce qu'**il est prévu dans la gaine de protection (5) un élément de transmission optique comme élément de câble, en particulier un câble à fibres optiques (4).

8. Passe-câble selon l'une des revendications précédentes, **caractérisé en ce que** la gaine de protection (5) est composée de deux moitiés partielles (9, 10), le joint de séparation entre les moitiés partielles s'étendant sensiblement parallèlement à l'extension longitudinale de la gaine de protection.

9. Passe-câble selon la revendication 8, **caractérisé en ce que** les surfaces des moitiés partielles (9, 10), en contact l'une contre l'autre dans l'état de montage, présentent une denture (12) s'étendant en direction longitudinale de la gaine de protection (5).

10. Passe-câble selon l'une des revendications précédentes, **caractérisé en ce que** le corps de passe-câble (2) est en polyuréthane.

11. Procédé pour fabriquer un passe-câble (1) selon l'une des revendications précédentes, **caractérisé en ce que** :
- au moins un élément de câble est introduit dans au moins une gaine de protection pour la protection à l'encontre des contraintes thermiques et/ou mécaniques ;
- la gaine de protection (5) ainsi garnie est ensuite enrobée de matière plastique liquide de sorte qu'il se forme un corps de passe-câble (2) après la figeage de la matière plastique ; et
- lors de l'opération d'enrobage, de la matière plastique liquide est amenée en même temps depuis l'extérieur jusque dans l'intérieur de la gaine de protection (5) à travers au moins un canal transversal (6) dans la paroi tubulaire de la gaine de protection (5), de sorte que la gaine de protection (5) est remplie en grande partie de manière étanche à l'eau en sens longitudinal dans la région de cet emplacement de pénétration.

12. Procédé selon la revendication 11, **caractérisé en ce que**, avant l'enrobage par projection, par coulée, ou par moussage, une pluralité d'éléments de câble, qui sont moins sensibles thermiquement et/ou mécaniquement qu'un élément de câble dans la gaine de protection (5), sont agencés à l'extérieur autour de ladite au moins une gaine de protection (5).

13. Procédé selon l'une ou l'autre des revendications 11 et 12, **caractérisé en ce que** du polyuréthane est utilisé comme matière plastique.
